# EUROPÄISCHE PATENTSCHRIFT

(11) **EP 3 931 133 B1**
(45) Veröffentlichungstag und Bekanntmachung des Hinweises auf die Patenterteilung: **01.04.2026**
(21) Anmeldenummer: 20706683.8
(22) Anmeldetag: 19.02.2020
(51) Int. Cl.: B65G 29/00, B25J 11/00, B65G 47/86, B67C 7/00, B65G 47/84, B65B 3/00

(54) **VORRICHTUNG ZUM TRANSPORT ZUMINDEST EINES OBJEKTS, INSBESONDERE EINES PHARMAZEUTISCHEN BEHÄLTNISSES**
APPARATUS FOR TRANSPORTING AT LEAST ONE OBJECT, IN PARTICULAR A PHARMACEUTICAL CONTAINER
ARRANGEMENT POUR LE TRANSPORT D'AU MOINS UN OBJET, NOTAMMENT D'UN RÉCIPIENT PHARMACEUTIQUE

(30) Priorität: 28.02.2019 DE 102019202726
(43) Veröffentlichungstag der Anmeldung: 05.01.2022
(73) Patentinhaber: Syntegon Technology GmbH, 70372 Stuttgart (DE)
(72) Erfinder: MAURISCHAT, Wolfgang Hagen, 74589 Satteldorf (DE)
(74) Vertreter: Novagraaf Group
(86) Internationale Anmeldenummer: PCT/EP2020/054364
(87) Internationale Veröffentlichungsnummer: WO 2020/173789

(56) Entgegenhaltungen:
- EP-A1- 3 090 954
- WO-A1-2011/000606
- WO-A1-2018/162145
- WO-A1-92/11197
- CN-A- 109 230 291
- DE-A1- 102014 107 221
- DE-A1- 102015 224 973
- DE-A1- 3 621 976
- JP-A- 2004 099 304
- JP-A- 2007 055 703
- JP-A- 2010 168 047
- US-A1- 2005 028 940

## Beschreibung

Die Erfindung geht aus von einer Vorrichtung zum Transport zumindest eines Objekts, insbesondere eines pharmazeutischen Behältnisses. Eine Vorrichtung mit den Merkmalen des Oberbegriffs des Patentanspruchs 1 ist aus der WO 2018/162145 A1 bekannt. Aus der JP 2004 099304 A ist eine weitere Transportvorrichtung bekannt.

Aus der DE 1020080002245 A1 ist bereits eine Sternradanordnung zum Transport von Behältnissen bekannt, umfassend ein erstes Sternrad, ein zweites Sternrad und eine Übergabevorrichtung, welche in Transportrichtung zwischen den beiden Sternrädern angeordnet ist. Die Übergabevorrichtung umfasst ein erstes Sternsegment mit einem ersten Antrieb, ein weiteres Sternsegment mit einem weiteren Antrieb und ein drittes Sternsegment mit einem dritten Antrieb, wobei die Sternsegmente übereinander und um eine gemeinsame Achse drehbar angeordnet sind.

Aus der DE 202005017588 U1 ist bereits ein Roboter für die Ausführung von Handhabungsvorgängen in einem Reinraum bekannt. Antriebsmittel bewegen einen Roboterarm, der sich im Reinraum befindet. Es sind Dichtungsmittel vorgesehen, die das Innere des Roboterarms gegenüber dem Reinraum komplett abdichten.

Aus der DE 102009045947 A1 ist eine Vorrichtung zum Befüllen und Verschließen von Behältnissen, insbesondere von unterschiedlichen Arten von pharmazeutischen Behältnissen, mit Bearbeitungsstationen zum Durchführen verschiedener Bearbeitungsschritte an den unterschiedlichen Arten der Behältnisse bekannt, wobei je nach Art der zu befüllenden und zu verschließenden Behältnisse unterschiedliche Bearbeitungsschritte an den Bearbeitungsstationen durchgeführt werden. Wenigstens eine Bearbeitungsstation ist zum Durchführen von unterschiedlichen Bearbeitungsschritten an unterschiedlichen Arten von Behältnissen ausgebildet.

Der Erfindung liegt die Aufgabe zugrunde, den Stand der Technik weiter zu verbessern, insbesondere den technischen Aufwand zu reduzieren. Die Aufgabe wird gelöst durch die Merkmale des unabhängigen Anspruchs.

### Vorteile der Erfindung

Die erfindungsgemäße Vorrichtung mit den Merkmalen des unabhängigen Anspruchs hat demgegenüber insbesondere für das pharmazeutische Umfeld den Vorteil, dass sie mit einer einfachen Transportvorrichtung auskommt, die als Hub- und Drehvorrichtung ausgebildet ist. Insbesondere bei Prozessen, die immer ohne Zwischenschritte aufeinanderfolgen, ist kein separates Handling der Objekte (also das Einsetzen und Entnehmen separat für jede Prozessstation) notwendig. Der Transport der Objekte bei diesen aufeinanderfolgenden Prozessschritten kann durch einfachere kostengünstige, vorzugsweise stationäre, Transporteinrichtungen realisiert werden. Diese fest miteinander verknüpften Stationen sind als Prozessinseln ausgebildet. Die Prozessinseln werden beispielsweise durch hochwertige Mehrachs-Robotertechnik mit zu verarbeitenden Objekten versorgt und nach der Bearbeitung wieder entnommen. Der Roboter greift jedoch nicht auf die einzelnen Prozesse zu. Hierzu wurde die Vorrichtung zum Transport des Objekts so gestaltet, dass die damit gehandhabten Objekte für verschiedenste Prozess-Anforderungen zweckentsprechend bereitgestellt werden, aber immer noch in der Transporteinrichtung verbleiben können. Die Gestaltung einer solchen Transportvorrichtung kann einfach und kostengünstig erfolgen. Damit besteht ein wesentlicher Vorteil darin, dass weniger aufwendige Robotertechnik eingesetzt werden muss, insbesondere je mehr Prozessinseln gebildet werden. Ein weiterer Vorteil besteht darin, dass entsprechend weniger Zugriffsoperationen auf die Objekte, insbesondere empfindliche Glascontainer, notwendig werden. Dies erhöht die Sicherheit der Verarbeitungsprozesse. Vorteilhafterweise kann die Bestückung und Entnahme der Objekte aus den Prozessinseln parallel zu den Prozessabläufen erfolgen. Damit ergibt sich die notwendige Gesamttaktzeit aus nur den Prozesszeiten zuzüglich einem einfachen Positionswechsel der vorzugsweise stationären Transportvorrichtung. Für die aufwendige externe Robotertechnik ergibt sich damit die Möglichkeit, in einem größeren Zeitfenster langsamer zu fahren. Damit wird die strömungstechnische Beeinflussung der Laminarströmung insbesondere in sensiblen Abfüllbereichen geringer. Alternativ können auch mehr Aufgaben als bisher erledigt werden bzw. kann eine weitere Einsparung von Robotertechnik beispielsweise bei Einsatz eines Roboters mit Doppelgreifern anstelle zweier Roboter mit Einzelgreifern erfolgen.

In einer zweckmäßigen Weiterbildung ist eine Handlingseinrichtung, vorzugsweise ein Roboter vorgesehen, die das Objekt in der Zuführ-und/oder Entnahmeposition der Aufnahmeeinrichtung zuführt bzw. entnimmt. Lediglich für diese Tätigkeit wird eine Handlingseinrichtung benötigt. Während der eigentlichen Prozessschritte erfolgt der Transport über die Transportvorrichtung.

In einer zweckmäßigen Weiterbildung erfolgt die Zuführung bzw. Entnahme der Objekte, wenn sich ein weiteres Objekt im Bereich zumindest einer Station befindet. Somit kann im laufenden Betrieb ohne Unterbrechung des Prozessschrittes das Objekthandling vorgenommen werden. Dadurch können Prozessabläufe im Gesamten beschleunigt werden.

Die Aufnahmeeinrichtung umfasst zumindest einen Basishalter und eine Aufnahme für das Objekt, wobei der Basishalter und die Aufnahme relativ zueinander bewegbar ausgebildet sind. Durch diese eingeschränkte Bewegungsmöglichkeit können teilweise bei den Prozessen notwendige Aushebevorgänge besonders einfach realisiert werden, ohne dass ein komplettes Umsetzen des Objekts erfolgen muss.

In einer zweckmäßigen Weiterbildung umfasst die Aufnahme und/oder der Basishalter ein Führungsmittel. Insbesondere ist das Führungsmittel dornförmig oder konisch ausgebildet. Dadurch lassen sich besonders einfach eingeschränkte Relativbewegungen zwischen Aufnahme und Basishalter durchführen. Zweckmäßiger Weise kann das Führungsmittel hierzu mit einer Ausnehmung am Basishalter oder an der Aufnahme zusammenwirken.

In einer zweckmäßigen Weiterbildung ist zumindest ein Bewegungsmittel beispielsweise zum Antrieb einer Station vorgesehen. Über den ohnehin schon vorhandenen Antrieb kann die Aushubbewegung durchgeführt werden. Dadurch vereinfacht sich der Aufbau der Gesamtvorrichtung.

In einer zweckmäßigen Weiterbildung umfasst die Aufnahmeeinrichtung zumindest eine Begrenzung zur Begrenzung einer Relativbewegung zwischen der Aufnahme und dem Basishalter. Damit erfolgt der Aushub nur in den gewünschten zulässigen Bereichen. Die Sicherheit der Anordnung erhöht sich. Besonders zweckmäßig umfasst die Aufnahme einen Formsitz. Dieser stellt das sichere Halten des Kopfbereichs des Objekts sicher, sodass Beschädigungen vermieden werden können. Besonders zweckmäßig weist die Aufnahme einen unteren Haltebereich auf, der mit dem Boden des Objekts und/oder einer Waage zusammenwirken kann. Zum einen wird ein sicheres Halten gewährleistet, zum anderen kann das Objekt freigestellt werden zur genauen Gewichtserfassung. Besonders zweckmäßig besteht die Aufnahme aus Kunststoff. Dies stellt eine besonders schonende Behandlung der aufzunehmenden Objekte sicher, insbesondere wenn es sich um empfindliche Glascontainer oder Ähnliches handelt.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Vorrichtung ist in der Zeichnung dargestellt und wird nachfolgend näher beschrieben.

Es zeigen:

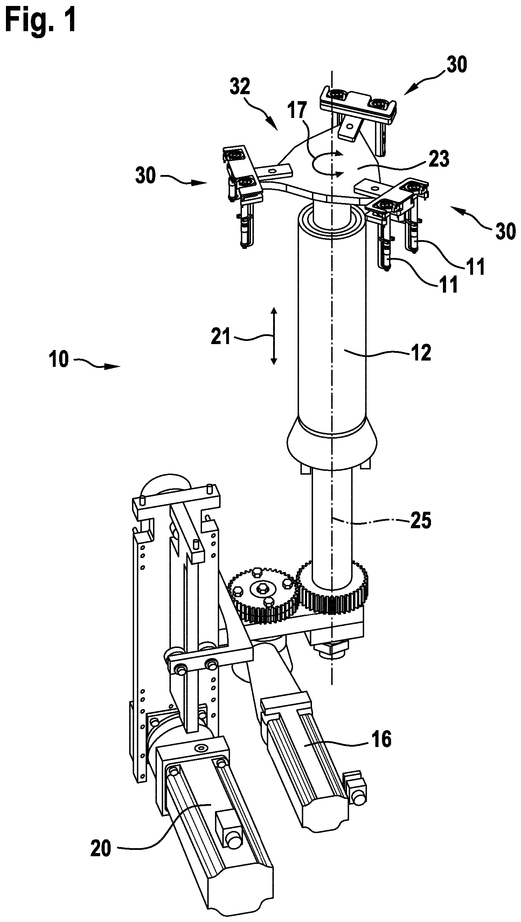

die Figur 1 eine perspektivische Ansicht eines Grundaufbaus der Vorrichtung zum Transport eines Objekts,
die Figur 2 eine perspektivische Ansicht der Aufnahmeeinrichtung mit Aufnahme,
die Figur 3 einen Schnitt durch die Aufnahmeeinrichtung im nicht ausgehobenen Zustand,
die Figur 4 einen Schnitt durch die Aufnahmeeinrichtung im ausgehobenen Zustand,

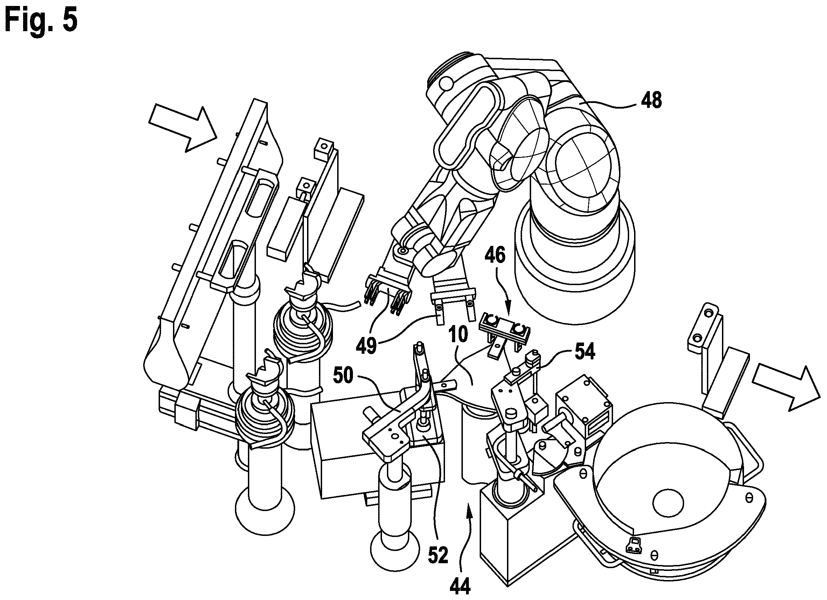

die Figur 5 eine perspektivische Darstellung einer Prozessinsel mit einem Roboter als externer Handlingseinrichtung sowie
die Figur 6 eine genauere perspektivische Ansicht der Transportvorrichtung mit zugehörigen Stationen.

Eine Vorrichtung 10 zum Transport eines Objekts 11 umfasst eine Baugruppe 32, an deren Platte 23 zumindest eine Aufnahmeeinrichtung 30 angeordnet ist. Im Ausführungsbeispiel sind es drei Aufnahmeeinrichtungen 30. Die Aufnahmeeinrichtungen 30 sind jeweils fest mit der Platte 23 verbunden. Die Aufnahmeeinrichtungen 30 können entlang einer Achse 25 durch einen Antrieb 16 in eine Drehbewegung 17 versetzt werden. Weiterhin ist ein Hubantrieb 20 vorgesehen, über den die Baugruppe 32 angehoben oder abgesenkt werden kann. Diese Bewegung ist als Bewegung 21 mit einem Doppelpfeil gekennzeichnet. Die Achse 25 wird von einer Säule 12 umgeben, die fest beispielsweise mit einer Grundplatte verbunden ist. Die Grundplatte ist vorzugsweise horizontal ausgerichtet. Die Grundplatte dient beispielsweise im pharmazeutischen Bereich als eine Trennwand eines Reinraums oder sonstigen sterilen Bereichs, in dem die zu transportierenden Objekte 11 verarbeitet werden. Hierbei können die Objekte 11 beispielsweise mit Pharmazeutika befüllt und/oder gewogen und/oder verschlossen werden. Die Vorrichtung 10 überführt die Objekte 11 von einer Zuführ- und/oder Entnahmeposition 46 zu den einzelnen Stationen 50, 52, 54 bzw. Prozessstationen im Reinraum. Es können auch mehrere Vorrichtung 10 vorgesehen sein.

Die Vorrichtung 10 ist als Hub-Dreheinheit ausgebildet. Aufeinanderfolgende Prozesse (beispielsweise Füllen, Wiegen, Verschließen) zugehörigen Stationen 50, 52, 54 werden nicht separat bestückt und entleert, sondern durch eine Hub-Drehbewegung der Vorrichtung 10 verbunden. Eine Handlingseinrichtung 48 wie beispielsweise ein Roboter führt zu und/oder entnimmt Objekte 11 der Vorrichtung 10, während die Prozesse laufen, also nicht mehr nach Prozessende.

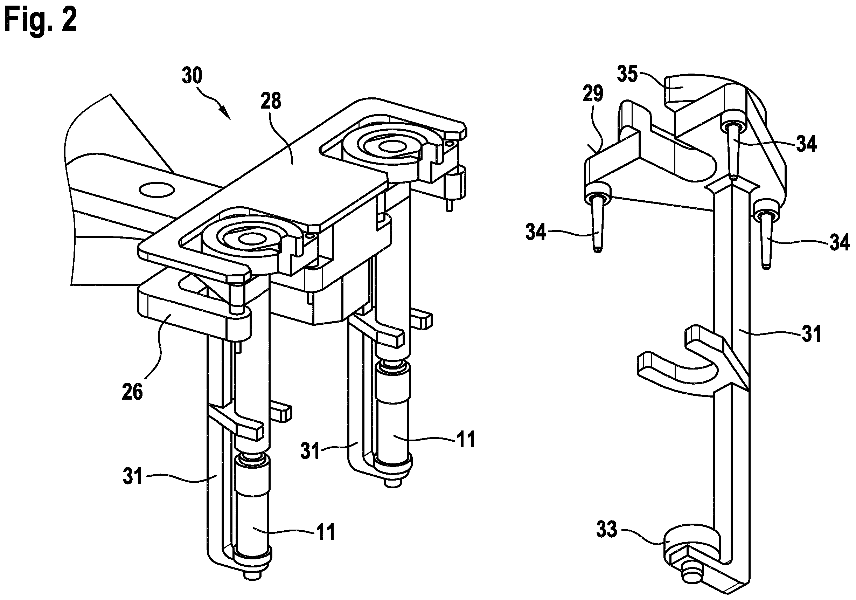

In Figur 2 ist der Aufbau der Aufnahmeeinrichtung 30 genauer gezeigt. Im Ausführungsbeispiel dient die Aufnahmeeinrichtung 30 der Aufnahme zweier Objekte 11. Die Aufnahmeeinrichtung 30 könnte jedoch auch lediglich nur ein Objekt 11 oder mehrere Objekte 11 gleichzeitig aufnehmen. Bei den Objekten 11 kann es sich beispielsweise um Glascontainer, Ampullen, Vials oder ähnliches handeln, welche insbesondere mit pharmazeutischen Produkt abgefüllt werden.

Zum Schutz des Objekts 11 ist eine Aufnahme 31 vorgesehen. Die Aufnahme 31 ist beispielsweise als Formatteil ausgebildet und an der Geometrie des aufzunehmenden Objekts 11 orientiert. Die Aufnahme 31 könnte beispielsweise aus Kunststoff ausgebildet sein. Die Aufnahme 31 nimmt einem unteren Bereich 33 den Boden des Objekts 11 auf. Außerdem wird das Objekt 11 seitlich umschlossen durch entsprechende Öffnungen, die der Außenkontur des aufzunehmenden Objekts 11 angepasst sind. Solche Konturen sind im mittleren Bereich der Aufnahme 31 sowie im oberen Bereich der Aufnahme 31 vorgesehen. Die Aufnahmen 31 sind so gestaltet, dass die Objekte 11 in den Aufnahmen 31 bestmöglich zentriert sind, insbesondere durch einen Formsitz 35 im oberen Bereich des Objekts 11, insbesondere bei Spritzen. Der eigentliche Umsatzvorgang der Objekte 11 durch die Vorrichtung 10 erfolgt durch Anhub und Drehung (im Ausführungsbeispiel 120°-Drehung).

Außerdem umfasst die Aufnahme 31 zumindest ein Führungsmittel 34. Im Ausführungsbeispiel sind drei Führungsmittel 34 vorgesehen. Diese Führungsmittel 34 sind beispielsweise als konische Führungsdorne ausgebildet. Vorzugsweise laufen sie zum Ende hin verjüngend aus. Die Führungsmittel 34 fluchten in entsprechenden Öffnungen bzw. Ausnehmungen 27 der Aufnahmeeinrichtungen 30. Im Ausführungsbeispiel sind diese Öffnungen 27 in dem Basishalter 26 ausgebildet. Der Basishalter 26 umgibt wiederum die Aufnahme 31. Der Basishalter 26 dient der Halterung der Aufnahme 31. Die Führungsmittel 34 stellen die genaue Lage der Aufnahme 31 relativ zu dem Basishalter 26 ein. Außerdem ist eine Begrenzung 28 vorgesehen. Die Begrenzung 28 befindet sich oberhalb des Basishalters 26. Die Begrenzung 28 wirkt mit einer Anlagefläche 29 der Aufnahme 31 zusammen. Die Begrenzung 28 lässt eine gewisse definierte Aushubbewegung der Aufnahme 31 entlang der Achse des Objekts 11 bzw. entsprechend der Hubbewegung 21 zu.

Die Besonderheit besteht darin, dass die Aufnahmen 31 zusammen mit den Objekten 11 je nach Prozessanforderung in den jeweiligen Stationen 50, 52, 54 frei hängend verarbeitet werden können (beispielsweise beim Verschließen bzw. Stopfen setzen) oder beim Absetzen auf einer Waage 52 bzw. Wiegestation ausgehoben werden (zum Füllen auf der Waage 52). Die Aufnahme 31 ist relativ zu der Aufnahmeeinrichtung 30 und/oder im Basishalter 26 anhubfähig ausgebildet. Insbesondere durch die Verwendung von konischen Führungsdornen als Führungsmittel 34 ist ein unverspanntes, aber dennoch hinreichend genaues Positionieren der Objekte 11 im ausgehobenen Zustand möglich. So wird beispielsweise auf der Waage bzw. Wiegestation 52 beim Füllen der leeren Objekte 11 mit der ausgehobenen Aufnahme 31 ein Tara-Wert des Produkts erfasst. Im Ausführungsbeispiel ist der Prozess zweistellig ausgebildet. Zwei Objekte 11 können gleichzeitig auf zwei unabhängigen Wiege-und Füllplätzen in der Füllstation 50 bzw. Wiegestation 52 befüllt und verwogen werden.

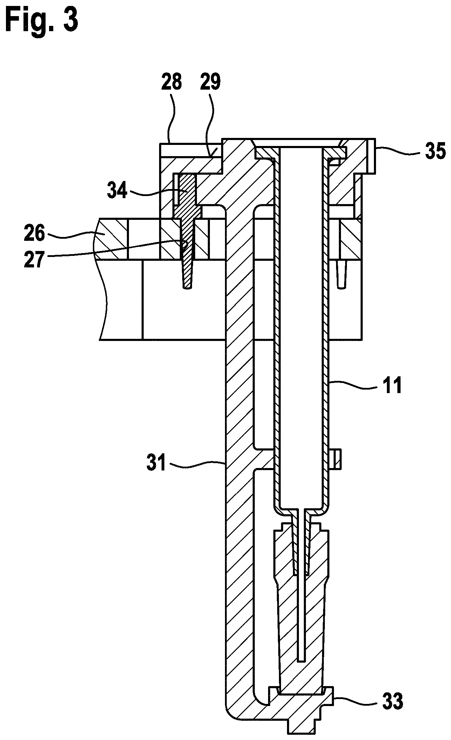

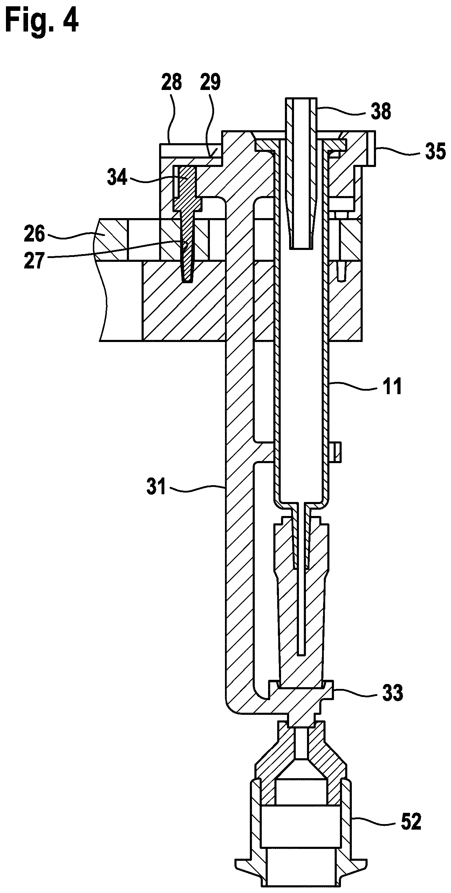

Die unterschiedlichen Hubpositionen sind in den Figuren 3 und 4 gezeigt. Die Ansicht gemäß Figur 3 zeigt das in die Aufnahme 31 eingesetzte Objekt 11, welches jedoch nicht ausgehoben ist. In dieser Position kann das Objekt 11 transportiert werden bzw. eignet sich für solche Prozessschritte, bei denen das Objekt 11 nicht ausgehoben werden muss.

Bei der Ansicht gemäß Figur 4 hingegen wurde das Objekt 11 ausgehoben. Exemplarisch ist das Objekt 11 in einer Füllposition auf einer Waage 52 gezeigt. Über eine Füllnadel 38, die von oben in das zu befüllende Objekt 11 eintaucht, wird das zu befüllende Produkt zugeführt und im freigestellten Zustand zugleich verwogen. Damit kann während des Befüllens das zugeführte Produkt erfasst bzw. gewogen und der Füllvorgang entsprechend gesteuert werden. In der ausgehobenen Position werden die Führungsmittel 34 nicht mehr von den vorzugsweise konischen Auflageflächen der Ausnehmungen des Basishalters 26 gehalten. Gleichwohl befinden sich die Führungsmittel 34 noch innerhalb der Ausnehmungen 27, sodass diese bei einem Zurücksetzen leicht in diese eingebracht werden können.

Das Ausheben könnte beispielsweise durch den Hubantrieb 20 erfolgen. Alternativ sind Bewegungseinrichtungen vorgesehen, die Bestandteile der Stationen 50, 52, 54 sein könnten und zum Zwecke des Aushebens auf die Aufnahme 31 einwirken können.

Das Ausführungsbeispiel gemäß 5 zeigt beispielhaft eine komplette Prozessinsel 44 mit einer Handhabung der Objekte 11 mit nur einer Handlingseinrichtung 48 wie beispielsweise ein Roboter. Diese Handlingseinrichtung 48 umfasst beispielsweise einen Doppelgreifer. Die Greifer 49 des Doppelgreifers werden jeweils autonom voneinander betrieben. Sie sind mit je zwei Spannstellen für die Aufnahme von zwei Objekten 11 ausgerüstet. Auch mehr oder weniger Spannstellen können vorgesehen sein. Das Handling der Objekte 11 erfolgt in dieser Variante parallel zu den Prozessabläufen. Also eine Zuführung oder Abführung der Objekte 11 zu der Aufnahmeeinrichtungen 30 erfolgt während der Durchführung der Prozesse an den jeweiligen Stationen 50, 52 ,54. An der Prozessinsel 44 werden an einer Zuführposition 46 zwei neue, leere und zu befüllende Objekte 11 durch den Roboter 48 zugeführt. Zuvor hat der Roboter 48 eventuell bereits befüllte Objekte 11 durch den weiteren Greifer 49 entnommen. Der Roboter 48 transportiert die befüllten Objekte 11 zur Übergabestelle der nächsten Prozessinsel. Außerdem holt der Roboter 48 neue, leere Objekte 11 von der vorherigen Übergabe (beispielsweise einer Station, die leere Objekte 11 aus einem Nest (Haltevorrichtung für eine Vielzahl von üblicherweise vorsterilisierten Objekten 11) zur weiteren Verarbeitung entnimmt und bereitstellt.

Die Prozessinsel 44 umfasst mehrere Stationen. Hierbei kann es sich um eine Füllstation 50 und/oder eine Wiegestation 52 mit einer Waage und/oder eine Verschließstation 54 und/oder eine Kontrollstation oder Ähnliches handeln.

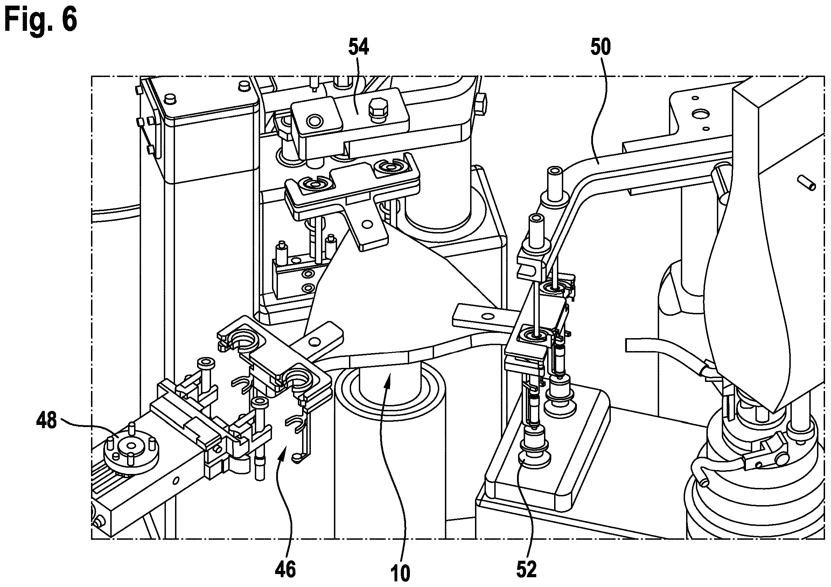

Eine Detailansicht der Prozessinsel 44 mit entsprechender Transportvorrichtung 10 ist in Figur 6 ausschnittweise gezeigt. Daraus wird ersichtlich, wie der Greifer 49 der Handlingseinrichtung 48 die Objekte 11 der Vorrichtung 10 zu- bzw. abführt. So werden die leeren Objekte 11 in die Aufnahmen 31 eingedrückt. Anschließend öffnet sich der Greifer 49. Der Greifer 49 wird wieder von der Zuführposition 46 weg bewegt. Die Vorrichtung 10 zum Transport des Objekts 11 bewegt sich im Ausführungsbeispiel entgegen dem Uhrzeigersinn zur nächsten Station, nämlich zu der Füllstation 50. Wie bereits in Figur 4 angedeutet wird in der Füllposition die Füllnadel 38 in das zu befüllende Objekt 11 abgesenkt. Zur Freistellung des zu befüllenden Objekts 11 wird dieses zusammen mit der Aufnahme 31 ausgehoben. Unterhalb befindet sich die Waage einer Wiegestation 52.

Generell können die Prozesse die Aufnahmen 31 ausheben oder im abgesenkten Zustand bearbeiten. Hierbei müssen die Prozesseinheiten lediglich ein seitliches Durchdrehen der Objekte 11 in ihren Aufnahmen 31 zulassen.

Nach erfolgtem Befüllvorgang werden die befüllten Objekte 11 mit zugehörigen Aufnahmen 31 wieder zurück in den nicht ausgehobenen Zustand überführt. Die Vorrichtung 10 bewegt die Objekte 11 weiter zu der weiteren Station 54. Im Ausführungsbeispiel handelt es sich bei der weiteren Prozessstation 54 um eine Verschließstation. Hierbei werden Verschlusselemente wie Stopfen oder Ähnliches in geeigneter Weise über der Öffnung des Objekts 11 positioniert und eingedrückt. Das Eindrücken kann durch eine entsprechende Bewegung der Verschließstation 54 und/oder durch eine Hubbewegung 21 der Vorrichtung 10 erfolgen.

Nach erfolgtem Verschließen bewegt die Vorrichtung 10 das befüllte und verschlossene Objekt 11 in die Zuführ- und/oder Entnahmeposition 46. Dort entnimmt der Greifer 49 der Handlingseinrichtung 48 die befüllten und verschlossenen Objekte 11. die Handlingseinrichtung bringt die verschlossenen Objekte 11 zu einer weiteren Station (beispielsweise eine Inspektionsstation, Beschriftung oder Ähnliches). Hierbei könnte die Handlingseinrichtung 48 die befüllten und verschlossenen Objekte 11 wieder zurück in ein Nest setzen. Anschließend führt die Handlingseinrichtung 48 wie bereits beschrieben leere, noch zu befüllende Objekte 11 in der Zuführposition 46 der Vorrichtung 10 zum Transport der Objekte 11 zu.

Alternativ könnte es sich auch um andere weitere Stationen handeln (Entnahme aus einem Nest, Reinigungsstation, Inspektionsstation, Wiegestation, Beschriftung, Stopfen setzen, Kappe bei Vials aufziehen, Bördeln bei Vials, Rücksetzen in ein Nest etc.).

Zum einen zeichnet sich die Vorrichtung 10 zum Transport des Objekts 11 durch eine einfache Bauweise aus. So führt die Vorrichtung 10 lediglich eine Dreh-Hub-Bewegung aus. Die Bewegungsbahn der Aufnahmeeinrichtung 30 zeichnet sich durch eine einfache, stetige Bewegung aus, so dass möglichst wenige störende Luftströmungen erzeugt werden. Insbesondere im Stillstand der Aufnahmeeinrichtung 30 kann die Hubbewegung 21 ein Anheben oder Absenken der Aufnahmeeinrichtung 30 bewirken. Dies wird erfindungsgemäß erreicht durch eine Vorrichtung zum Transport zumindest eines Objekts 11, insbesondere eines pharmazeutischen Behältnisses, umfassend zumindest eine Aufnahmeeinrichtung 30, zumindest einen Antrieb 16, 20 zur Erzeugung einer Hub-Drehbewegung 21 der Aufnahmeeinrichtung 30 zum Transport des in der Aufnahmeeinrichtung 30 befindlichen Objekts 11 zwischen mehreren Stationen 50, 52, 54, insbesondere eine Füllstation 50, wobei die Aufnahmeeinrichtung 30 zumindest einen Basishalter 26 und zumindest eine Aufnahme 31 für das Objekt 11 umfasst, wobei der Basishalter 26 und die Aufnahme 31 relativ zueinander bewegbar ausgebildet sind.

Durch die Vorrichtung 10 kann eine Vielzahl von Objekten 11 bzw. Behältnissen, insbesondere von pharmazeutischen Behältnissen wie Spritzen, Vials, Karpulen, Ampullen oder ähnliches transportiert werden. Die Vorrichtung 10 eignet sich gerade für Anwendungen mit hoher Sterilitätsanforderung beispielsweise beim Abfüllen von Pharmazeutika oder Lebensmitteln insbesondere unter aseptischen Bedingungen. Die Verwendung ist jedoch darauf nicht eingeschränkt.

## Patentansprüche

1. Vorrichtung zum Transport zumindest eines Objekts (11), insbesondere eines pharmazeutischen Behältnisses, zu mehreren Stationen (50, 52, 54), umfassend zumindest eine Aufnahmeeinrichtung (30), zumindest einen Antrieb (16) zur Erzeugung einer Drehbewegung (17) der Aufnahmeeinrichtung (30) zum Transport des in der Aufnahmeeinrichtung (30) befindlichen Objekts (11) zwischen zumindest einer Station (50, 52, 54), vorzugsweise mehreren Stationen (50, 52, 54), und einer Zuführ- und/oder Entnahmeposition (46), in der zumindest ein Objekt (11) der Aufnahmeeinrichtung (30) zuführbar oder entnehmbar ist, wobei die Aufnahmeeinrichtung (30) so ausgebildet ist, dass das Objekt (11) in der Aufnahmeeinrichtung (30) verbleibt, wenn sich das Objekt (11) an der Station (50, 52, 54) befindet, wobei die Aufnahmeeinrichtung (30) zumindest einen Basishalter (26) und zumindest eine Aufnahme (31) für das Objekt (11) umfasst, wobei der Basishalter (26) und die Aufnahme (31) relativ zueinander bewegbar ausgebildet sind, wobei die Vorrichtung (10) eine Baugruppe (32) mit einer Platte (23) umfasst, wobei die Aufnahmeeinrichtung (30) an der Platte (23) angeordnet und fest mit der Platte (23) verbunden ist, wobei ein Hubantrieb (20) vorgesehen ist, **dadurch gekennzeichnet, dass**
die Aufnahme (31) relativ zu dem Basishalter (26) aushebbar ist und dadurch, dass
über den Hubantrieb (20) die Baugruppe (32) angehoben oder abgesenkt werden kann, sodass durch den Hubantrieb (20) eine Hubbewegung der den Basishalter (26) und die Aufnahme (31) umfassenden Aufnahmeeinrichtung (30) erzeugbar ist.

2. Vorrichtung nach Anspruch 1, **dadurch gekennzeichnet, dass** zumindest eine Handlingseinrichtung (48), vorzugsweise ein Roboter, vorgesehen ist, die das Objekt (11) in der Zuführ- und/oder Entnahmeposition (46) der Aufnahmeeinrichtung (30) zuführt bzw. entnimmt.

3. Vorrichtung nach Anspruch 2, **dadurch gekennzeichnet, dass** die Handlingseinrichtung (48) das Objekt (11) der Aufnahmeeinrichtung (30) zuführt oder entnimmt, wenn sich ein weiteres Objekt (11) im Bereich zumindest einer Station (50, 52, 54) befindet.

4. Vorrichtung nach einem der vorhergehenden Ansprüche, **dadurch gekennzeichnet, dass** als Station zumindest eine Füllstation (50) und/oder Wiegestation (52) und/oder eine Verschließstation (54) und/oder eine Kontrollstation vorgesehen sind.

5. Vorrichtung nach einem der vorhergehenden Ansprüche, **dadurch gekennzeichnet, dass** die Aufnahme (31) oder der Basishalter (26) zumindest ein Führungsmittel (34) umfasst, das mit dem Basishalter (26) bzw. der Aufnahme (31) zusammenwirkt.

6. Vorrichtung nach Anspruch 5, **dadurch gekennzeichnet, dass** das Führungsmittel (34) dornförmig und/oder konisch ausgebildet ist.

7. Vorrichtung nach Anspruch 5 oder 6, **dadurch gekennzeichnet, dass** das Führungsmittel (34) mit zumindest einer Ausnehmung (27) am Basishalter (26) bzw. Aufnahme (31) zusammenwirkt.

8. Vorrichtung nach einem der vorhergehenden Ansprüche, **dadurch gekennzeichnet, dass** zumindest ein Bewegungsmittel vorgesehen ist zur Erzeugung einer Relativbewegung zwischen Aufnahme (31) und Basishalter (26).

9. Vorrichtung nach Anspruch 8, **dadurch gekennzeichnet, dass** als Bewegungsmittel der Hubantrieb (20) und/oder ein Antrieb einer Station (50, 52, 54), insbesondere der Füllstation (50) und/oder der Wiegestation bzw. Waage (52) und/oder der Verschließstation (54) vorgesehen ist bzw. sind.

10. Vorrichtung nach einem der vorhergehenden Ansprüche, **dadurch gekennzeichnet, dass** die Aufnahmeeinrichtung (30) zumindest eine Begrenzung (28) umfasst zur Begrenzung einer Relativbewegung zwischen Aufnahme (31) und Basishalter (26).

11. Vorrichtung nach einem der vorhergehenden Ansprüche, **dadurch gekennzeichnet, dass** die Aufnahme (31) zumindest einen Formsitz (35) aufweist, insbesondere zum sicheren Halten eines Kopfbereichs des Objekts (11).

12. Vorrichtung nach einem der vorhergehenden Ansprüche, **dadurch gekennzeichnet, dass** die Aufnahme (31) einen unteren Haltebereich (33) umfasst, der zum Zusammenwirken mit einem Boden des Objekts (11) und/oder mit einer Waage (52) ausgebildet ist.

13. Vorrichtung nach einem der vorhergehenden Ansprüche, **dadurch gekennzeichnet, dass** die Aufnahme (31) aus Kunststoff besteht.

## Claims

1. Apparatus for transporting at least one object (11), in particular a pharmaceutical container, to a plurality of stations (50, 52, 54), which apparatus comprises at least one receiving device (30), at least one drive (16) for generating a rotary movement (17) of the receiving device (30) for transporting the object (11) located in the receiving device (30) between at least one station (50, 52, 54), preferably a plurality of stations (50, 52, 54), and a supply and/or removal position (46) in which the at least one object (11) can be supplied to or removed from the receiving device (30), wherein the receiving device (30) is designed such that the object (11) remains in the receiving device (30) when the object (11) is located at the station (50, 52, 54), wherein
the receiving device (30) comprises at least one base retainer (26) and at least one receptacle (31) for the object (11), wherein the base retainer (26) and the receptacle (31) are designed to be movable relative to one another,
wherein the apparatus (10) comprises an assembly (32) having a plate (23), wherein the receiving device (30) is arranged on the plate (23) and is fixedly connected to the plate (23), wherein a lifting drive (20) is provided,
**characterized in that**
the receptacle (31) can be lifted relative to the base retainer (26) and **in that**
the assembly (32) can be raised or lowered by means of the lifting drive (20), so that a lifting movement of the receiving device (30) comprising the base retainer (26) and the receptacle (31) can be generated by the lifting drive (20).

2. Apparatus according to claim 1, **characterized in that** at least one handling device (48), preferably a robot, is provided which supplies or removes the object (11) in the supply and/or removal position (46) to or from the receiving device (30).

3. Apparatus according to claim 2, **characterized in that** the handling device (48) supplies or removes the object (11) to or from the receiving device (30) when another object (11) is located in the region of at least one station (50, 52, 54).

4. Apparatus according to any of the preceding claims,
**characterized in that** at least a filling station (50) and/or a weighing station (52) and/or a closing station (54) and/or a control station are provided as a station.

5. Apparatus according to any of the preceding claims, **characterized in that** the receptacle (31) or the base retainer (26) comprises at least one guide means (34) which interacts with the base retainer (26) or the receptacle (31).

6. Apparatus according to claim 5, **characterized in that** the guide means (34) is dome-shaped and/or conical.

7. Apparatus according to claim 5 or claim 6, **characterized in that** the guide means (34) interacts with at least one recess (27) on the base retainer (26) or receptacle (31).

8. Apparatus according to any of the preceding claims,
**characterized in that** at least one movement means is provided to generate a relative movement between the receptacle (31) and the base retainer (26).

9. Apparatus according to claim 8, **characterized in that** the lifting drive (20) and/or a drive of a station (50, 52, 54), in particular the filling station (50) and/or the weighing station or scale (52) and/or the closing station (54), is or are provided as movement means.

10. Apparatus according to any of the preceding claims, **characterized in that** the receiving device (30) comprises at least one limit (28) to limit a relative movement between the receptacle (31) and the base retainer (26).

11. Apparatus according to any of the preceding claims,
**characterized in that** the receptacle (31) has at least one form fit (35), in particular for securely retaining a head region of the object (11).

12. Apparatus according to any of the preceding claims,
**characterized in that** the receptacle (31) comprises a lower retaining region (33) designed to interact with a bottom of the object (11) and/or with a scale (52).

13. Apparatus according to any of the preceding claims,
**characterized in that** the receptacle (31) is made of plastics.

## Revendications

1. Dispositif pour le transport d'au moins un objet (11), en particulier d'un récipient pharmaceutique, vers plusieurs postes (50, 52, 54), comprenant au moins un appareil de réception (30), au moins un entraînement (16) pour la génération d'un mouvement de rotation (17) de l'appareil de réception (30) pour le transport de l'objet (11) se trouvant dans l'appareil de réception (30) entre au moins un poste (50, 52, 54), de préférence plusieurs postes (50, 52, 54), et une position d'amenée et/ou de prélèvement (46), dans laquelle au moins un objet (11) peut être amené à l'appareil de réception (30) ou en être prélevé, dans lequel l'appareil de réception (30) est conçu de sorte que l'objet (11) reste dans l'appareil de réception (30) lorsque l'objet (11) se trouve au niveau du poste (50, 52, 54), dans lequel
l'appareil de réception (30) comprend au moins un support formant base (26) et au moins un moyen de réception (31) pour l'objet (11), dans lequel le support formant base (26) et le moyen de réception (31) sont conçus de manière à pouvoir se mouvoir l'un par rapport à l'autre,
dans lequel le dispositif (10) comprend un module (32) comportant une plaque (23), dans lequel l'appareil de réception (30) est disposé sur la plaque (23) et relié fixement à la plaque (23), dans lequel un entraînement de levage (20) est prévu,
**caractérisé en ce que**
le moyen de réception (31) peut être soulevé par rapport au support formant base (26) et **en ce que**
le module (32) peut être soulevé ou abaissé par l'intermédiaire de l'entraînement de levage (20), de sorte qu'un mouvement de levage de l'appareil de réception (30) comprenant le support formant base (26) et le moyen de réception (31) peut être généré par l'entraînement de levage (20).

2. Dispositif selon la revendication 1, **caractérisé en ce qu'**est prévu au moins un appareil de manipulation (48), de préférence un robot, qui amène l'objet (11) à l'appareil de réception (30) ou l'y prélève dans la position d'amenée et/ou de prélèvement (46).

3. Dispositif selon la revendication 2, **caractérisé en ce que** l'appareil de manipulation (48) amène l'objet (11) à l'appareil de réception (30) ou l'y prélève lorsqu'un autre objet (11) se trouve dans la zone d'au moins un poste (50, 52, 54).

4. Dispositif selon l'une des revendications précédentes,
**caractérisé en ce que** sont prévus comme poste au moins un poste de remplissage (50) et/ou un poste de pesage (52) et/ou un poste de fermeture (54) et/ou un poste de contrôle.

5. Dispositif selon l'une des revendications précédentes,
**caractérisé en ce que** le moyen de réception (31) ou le support formant base (26) comprend au moins un moyen de guidage (34) qui coopère avec le support formant base (26) ou le moyen de réception (31).

6. Dispositif selon la revendication 5, **caractérisé en ce que** le moyen de guidage (34) est en forme de dôme et/ou de cône.

7. Dispositif selon la revendication 5 ou 6, **caractérisé en ce que** le moyen de guidage (34) coopère avec au moins un évidement (27) sur le support formant base (26) ou le moyen de réception (31).

8. Dispositif selon l'une des revendications précédentes,
**caractérisé en ce qu'au** moins un moyen de mouvement est prévu pour la génération d'un mouvement relatif entre le moyen de réception (31) et le support formant base (26).

9. Dispositif selon la revendication 8, **caractérisé en ce que** sont prévus comme moyen de mouvement l'entraînement de levage (20) et/ou un entraînement d'un poste (50, 52, 54), en particulier du poste de remplissage (50) et/ou du poste de pesage ou de la balance (52) et/ou du poste de fermeture (54).

10. Dispositif selon l'une des revendications précédentes,
**caractérisé en ce que** l'appareil de réception (30) comprend au moins un moyen de limitation (28) pour la limitation d'un mouvement relatif entre le moyen de réception (31) et le support formant base (26).

11. Dispositif selon l'une des revendications précédentes,
**caractérisé en ce que** le moyen de réception (31) présente au moins un siège à forme (35), en particulier pour le maintien de manière sûre d'une zone de tête de l'objet (11).

12. Dispositif selon l'une des revendications précédentes,
**caractérisé en ce que** le moyen de réception (31) comprend une zone de maintien inférieure (33) qui est conçue pour coopérer avec un fond de l'objet (11) et/ou avec une balance (52).

13. Dispositif selon l'une des revendications précédentes,
**caractérisé en ce que** le moyen de réception (31) est en matière plastique.
